# EUROPEAN PATENT SPECIFICATION

(11) **EP 2 138 389 B1**
(45) Date of publication and mention of the grant of the patent: **30.11.2011**
(21) Application number: 08252186.5
(22) Date of filing: 25.06.2008
(51) Int. Cl.: B62J 1/12, E05B 55/00, E05C 1/08, B62K 11/00

(54) **Motorcycle with a seat lock**
Motorrad mit einer Sitzsperre
Motocyclette avec un verrouilage de siège

(43) Date of publication of application: 30.12.2009
(73) Proprietor: Kwang Yang Motor Co., Ltd., San-Min Dist., Kaohsiung City (TW)
(72) Inventor: Ko, Shih-Chih, Kaohsiung Hsien (TW)
(74) Representative: Thomson, Neil David

(56) References cited:
- JP-A- 2001 260 969
- JP-A- 2004 011 257
- US-A- 3 440 844
- US-A- 4 330 145
- US-A1- 2007 068 201

## Description

This invention relates to a motorcycle, and more particularly to a motorcycle with a seat lock for locking a pivotable seat releasably on a motorcycle frame.

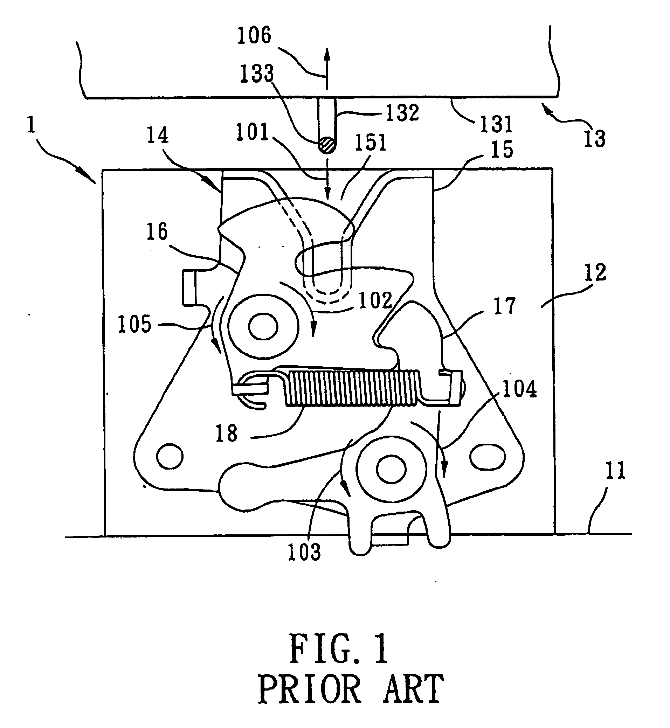

Referring to Fig. 1, a seat lock 14 is disposed on a motorcycle 1. The motorcycle 1 includes a frame 11, a vertical mounting plate 12 disposed fixedly on the frame 11, a seat 13 disposed pivotally on the frame 11 and locked releasably on the frame 11 by the seat lock 14, and a storage space (not shown) formed in the frame 11 under the seat 13. As such, the seat 13 serves as a cover for covering the storage space, and is pivotable between an open position and a covering position.

The seat 13 includes a seat body 131 and a seat hook 132 disposed fixedly on the seat body 131.

The seat lock 14 includes a base plate 15 disposed fixedly on the mounting plate 12 and formed with a retaining groove 151, a pair of first and second swinging plates 16, 17 disposed pivotally on the base plate 15, and a coiled tension spring 18 connected between the first and second swinging plates 16, 17.

When the seat hook 132 of the seat 13 is moved in a downward direction shown by the arrow 101 to push and rotate the first swinging plate 16 in a clockwise direction shown by the arrow 102, the second swinging plate 17 is pushed and rotated by the first swinging plate 16 in a counterclockwise direction shown by the arrow 103. When the seat hook 132 comes into contact with the base plate 15, the first and second swinging plates 16, 17 are biased by the tension spring 18 to return to the positions shown in Fig. 1 to thereby confine a horizontal rod portion 133 of the seat hook 132 within the retaining groove 151. Thus, the seat 13 is locked on the frame 11.

To enable a free end (i.e., rear end) of the seat 13 to pivot away from the frame 11, the second swinging plate 17 is rotated clockwise in a direction shown by the arrow 104 to pull the tension spring 13 to the right. Hence, the first swinging plate 16 is rotated counterclockwise in a direction shown by the arrow 105 to eject the horizontal rod portion 133 of the seat lock 132 out of the retaining groove 151 in an upward direction shown by the arrow 106, thereby allowing for removal of the free end of the seat 13 from the frame 11.

Since a space is required for rotation of the first and second swinging plates 16, 17, the total height of the seat lock 14 is increased significantly.

To maintain the height of the frame 11, if the total height of the seat lock 14 is increased, the thickness of the seat body 131 of the seat 13 must be reduced, thereby causing discomfort to the person riding on the seat 13.

A similar lock device is disclosed in JP 2004011257A which is considered as being the closet prior art, and which includes a driving member operable to move a retaining member.

Therefore, the object of this invention is to provide a motorcycle with a low-profile seat lock.

According to this invention, a motorcycle includes a seat lock. The seat lock includes a retaining member. The motorcycle includes a frame unit, two wheel units disposed on the frame unit, a seat disposed pivotally on the frame unit and locked on the frame by the seat lock, a driving member operable to unlock the seat from the frame unit, an engine for driving the wheel units, and a fuel tank disposed on the frame unit, the frame unit including a front frame and a rear frame that are interconnected, the seat including a seat body connected pivotally to the rear frame, and a seat hook disposed fixedly on the seat body, the seat lock being characterized by:
a fixed member disposed fixedly on the rear frame and including a fixed plate having a retaining groove, the seat hook being inserted into the retaining groove;
a swinging member including a swinging body disposed pivotally on the fixed plate, an anchoring portion extending from the swinging body, and an ejecting portion extending from the swinging body and aligned with the retaining groove;
the retaining member including a sliding plate portion disposed movably on the fixed plate, an anchoring portion extending from the sliding plate portion, and a stop portion extending from the sliding plate portion toward the swinging body, aligned with the retaining groove, and having a guiding surface, the stop portion cooperating with the ejecting portion of the swinging member to confine a portion of the seat hook therebetween and therefore within the retaining groove; and
a resilient member having two ends connected respectively to the anchoring portions of the swinging member and the retaining member for biasing the retaining member to move toward the swinging member and for biasing the ejecting portion to pivot toward the stop portion;
wherein the driving member is operable to move the retaining member away from the swinging member in a longitudinal direction so as to misalign the stop portion from the retaining groove, thereby allowing for removal of the seat hook from the retaining groove; and
wherein after the seat hook is removed from the retaining groove, the seat hook can be inserted again into the retaining groove to thereby press against the guiding surface of the stop portion so that the retaining member moves away from the swinging member in the longitudinal direction, thereby allowing the portion of the retaining hook to move to a position between the stop portion and the ejecting portion.

Since the retaining member is disposed movably on the frame unit, the height of the seat lock can be reduced to allow for increase in the thickness of the seat of the motorcycle, thereby making the motorcycle rider comfortable.

These and other features and advantages of this invention will become apparent in the following detailed description of the preferred embodiments of this invention, with reference to the accompanying drawings, in which:
Fig. 1 is a fragmentary, partly sectional side view of a conventional seat lock;
Fig. 2 is a side view of the first preferred embodiment of a motorcycle with a seat lock according to this invention when a seat is opened;
Fig. 3 is an exploded perspective view of the first preferred embodiment;
Fig. 4 is a fragmentary sectional side view of the first preferred embodiment, illustrating how the seat is unlocked from a frame unit;
Fig. 5 is a view similar to Fig. 4 but illustrating how the seat is locked on the frame unit;
Fig. 6 is a fragmentary sectional side view of the second preferred embodiment of a motorcycle with a seat lock according to this invention, illustrating how a seat is unlocked from a frame unit;
Fig. 7 is a view similar to Fig. 6 but illustrating how the seat is locked on the frame unit; and
Fig. 8 is a fragmentary sectional side view of the second preferred embodiment, illustrating a force analysis of a resistance to ejection of a seat hook.

Before the present invention is described in greater detail in connection with the preferred embodiments, it should be noted that similar elements and structures are designated by like reference numerals throughout the entire disclosure.

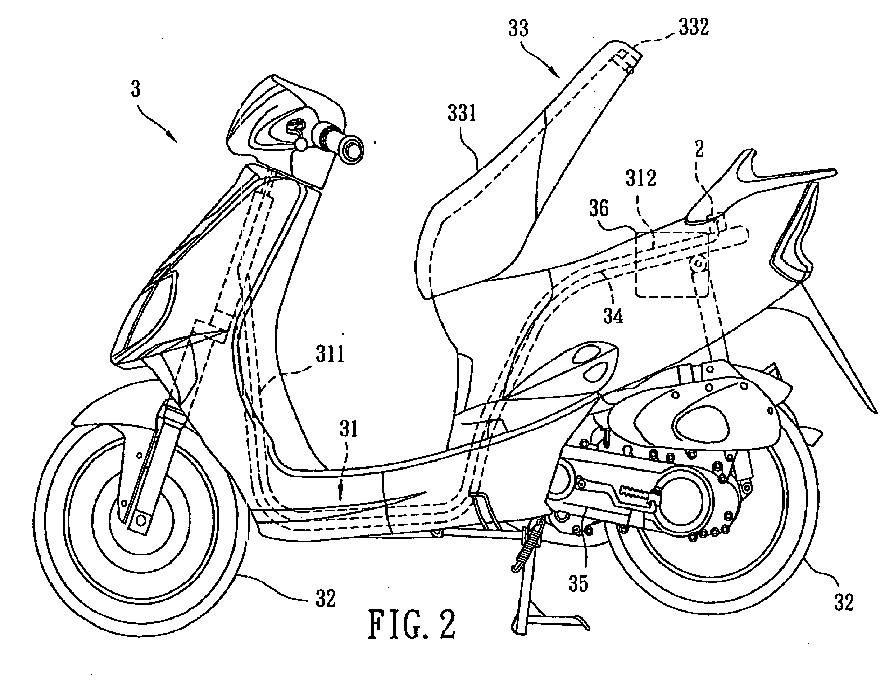

Referring to Fig. 2, the first preferred embodiment of a motorcycle 3 according to this invention includes a seat lock 2, a frame unit 31, two wheel units 32 disposed on the frame unit 31, a seat 33 disposed pivotally on the frame unit 31, a driving member 34, an engine 35 for driving the wheel units 32, and a fuel tank 36 disposed fixedly on the frame unit 31. The frame unit 31 includes a front frame 311 and a rear frame 312 that are interconnected. The seat 33 includes a seat body 331 connected pivotally to the rear frame 312 for covering a storage space (not shown) disposed under the seat 33, and a seat hook 332 disposed fixedly on the seat body 331.

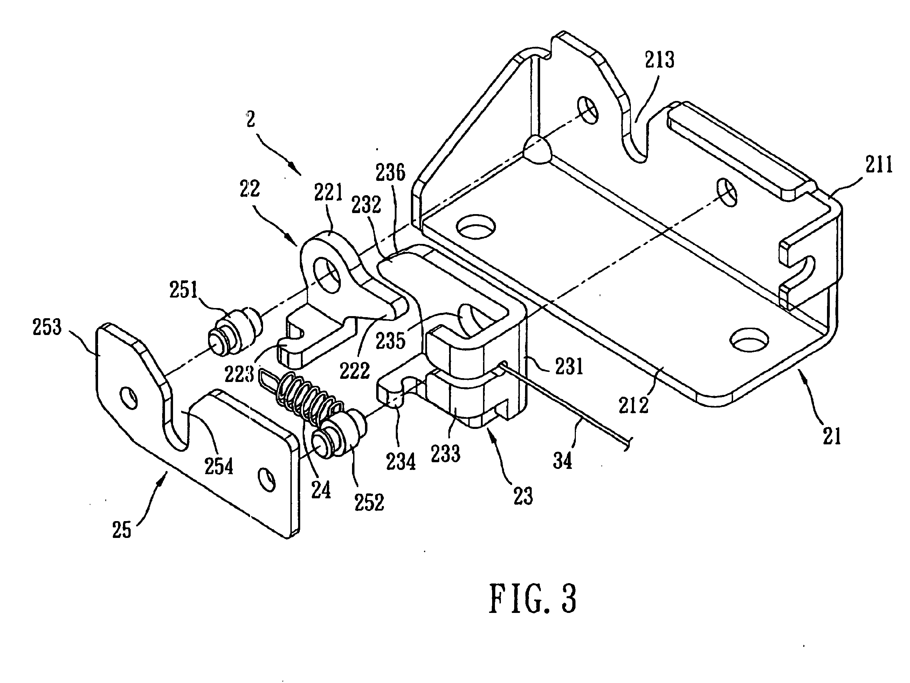

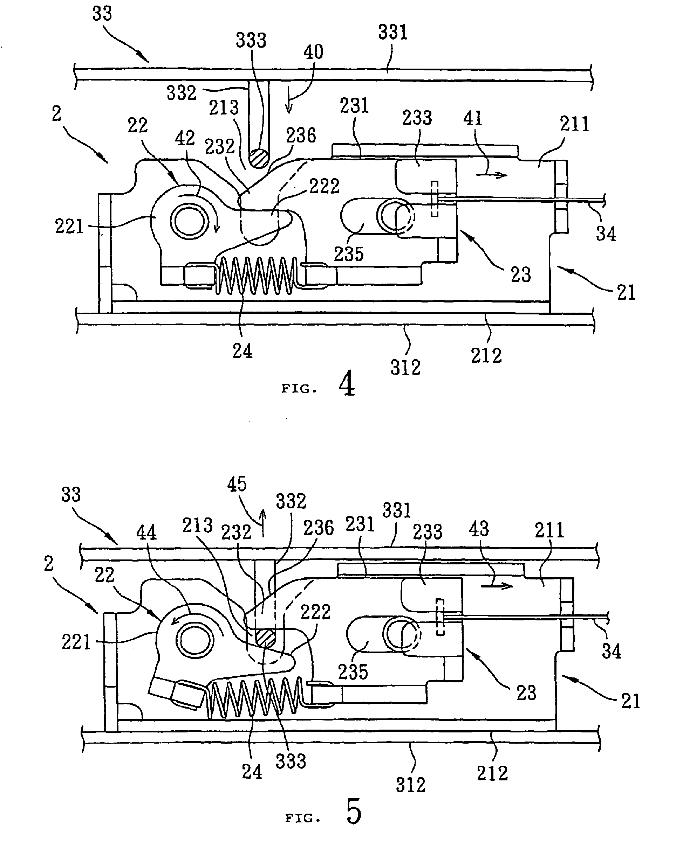

With further reference to Figs. 3 and 5, the seat 33 is locked releasably on the rear frame312 by the seat lock 2. The driving member 34 is operable to unlock the seat 33 from the frame unit 31.

The driving member 34 is a steel cable.

The seat lock 2 includes a fixed member 21, a swinging member 22, a retaining member 23, a resilient member 24, and a positioning unit 25.

The fixed member 21 includes a generally rectangular horizontal bottom plate 212 disposed fixedly on the rear frame 312, and a fixed plate 211 extending from a side of the bottom plate 212 and having a retaining groove 213. The seat hook 332 is inserted into the retaining groove 213. In this embodiment, the bottom plate 212 is disposed directly on the rear frame 312. Alternatively, the bottom plate 212 may be disposed fixedly on the fuel tank 36.

The swinging member 22 includes a swinging body 221 disposed pivotally on the fixed plate 211, an anchoring portion 223 extending from the swinging body 221, and an ejecting portion 222 extending from the swinging body 211 and aligned with the retaining groove 213.

The retaining member 23 includes a sliding plate portion 231 disposed movably on the fixed plate 211 and formed with a slide slot 235 extending in a longitudinal direction shown by the arrow 41 in Fig. 4, an anchoring portion 234 extending from the sliding plate body 231, a connecting portion 233 extending from the sliding plate body 231 and permitting an end of the driving member 34 to be fastened thereto, and a stop portion 232 extending from the sliding plate body 231 toward the swinging body 221 and aligned with the retaining groove 213. The stop portion 232 has an inclined top guiding surface 236. The stop portion 232 cooperates with the ejecting portion 222 of the swinging member 22 to confine a horizontal rod portion 333 of the seat hook 332 therebetween and therefore within the retaining groove 213.

The resilient member 24 is disposed below the ejecting portion 222, and is configured as a coiled tension spring having two ends connected respectively to the anchoring portions 223, 234 of the swing member 22 and the retaining member 23 for biasing the retaining member 23 to move toward the swinging member 22 and for biasing the ejecting portion 222 to pivot toward the stop portion 232.

The positioning unit 25 includes a position-limiting plate 253 disposed fixedly on the rear frame 312 and spaced apart from the fixed plate 211 of the fixed member 21, a rotating shaft 251 extending through the position-limiting plate 253 and the swinging body 221 and connected fixedly to the fixed plate 211, and a positioning shaft 252 extending through the position-limiting plate 253 and the slide slot 235 in the sliding plate body 231 and connected fixedly to the fixed plate 211. The position-limiting plate 253 is formed with an auxiliary groove 254 that is aligned with the retaining groove 213 in the fixed plate 211 and that permits the seat hook 332 to engage therewith.

With particular reference to Fig. 4, when the seat 33 is pivoted downwardly from an open position, the seat hook 332 is moved toward the retaining groove 213 in a direction shown by the arrow 40 in Fig. 4. After the seat hook 332 is inserted into the retaining groove 213, the horizontal rod portion 333 of the seat hook 332 presses against the guiding surface 236 of the stop portion 232. Hence, the retaining member 23 is moved away from the swinging member 22 in the longitudinal direction 41 to thereby allow the horizontal rod portion 333 of the seat hook 332 to move onto the ejecting portion 222. At this time, the horizontal rod portion 333 of the retaining hook 332 rotates the swinging member 22 in a clockwise direction shown by the arrow 42 in Fig. 4, and therefore continues to move downward. When the horizontal rod portion 333 of the retaining hook 332 moves to a position below the stop portion 232, the retaining member 23 is biased by the resilient member 24 to return to the position shown in Fig. 5 to thereby clamp the horizontal rod portion 333 between the stop portion 232 and the ejecting portion 222. That is, the seat 33 is locked on the rear frame 312.

When it is desired to pivot a free end of the seat 33 away from the rear frame 312, a key (not shown) is inserted into a keyhole (not shown) in the motorcycle 3 and then rotated to pull the driving member 34 in a direction shown by the arrow 43 in Fig. 4 to thereby move the retaining member 23 away from the swinging member 22. Hence, the stop portion 232 is misaligned from the retaining groove 213, and the resilient member 24 rotates the swinging member 22 in a counterclockwise direction shown by the arrow 44 in Fig. 5 to thereby eject the horizontal rod portion 333 of the seat hook 332 from the retaining groove 213 in an upward direction shown by the arrow 45 in Fig. 5.

Since the retaining member 23 is disposed movably on the rear frame 312, the height of the seat lock 2 can be reduced to allow for an increase in the thickness of the seat 33 of the motorcycle 3, thereby making the motorcycle rider comfortable. If the bottom plate 212 is disposed on the fuel tank 36, the volume of the fuel tank 36 can be increased due to a reduction in the height of the seat lock 2.

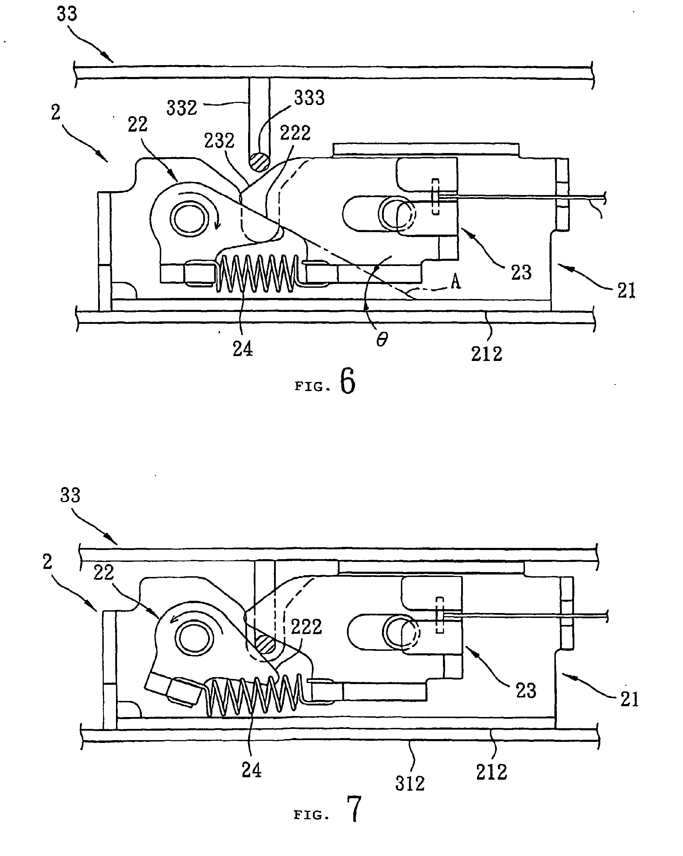

Figs. 6, 7, and 8 show a seat lock 2 of the second preferred embodiment of a a motorcycle according to this invention, which is similar in construction to that of the first preferred embodiment. In this embodiment, the seat lock 2 also includes a fixed member 21, a swinging member 22, a retaining member 23, a resilient member 24, and a positioning unit 25. Unlike the first preferred embodiment, the ejection portion 222 of the swinging member 22 and the stop portion 232 of the retaining member 23 have inclined contact surfaces (222A, 232A) that are in contact with each other when the seat 33 is unlocked from the frame unit 31, as shown in Fig. 6. The extension line (A) of the inclined contact surfaces (222A, 232A) forms an angle (θ) of about 30 degrees with respect to the horizontal bottom plate 212.

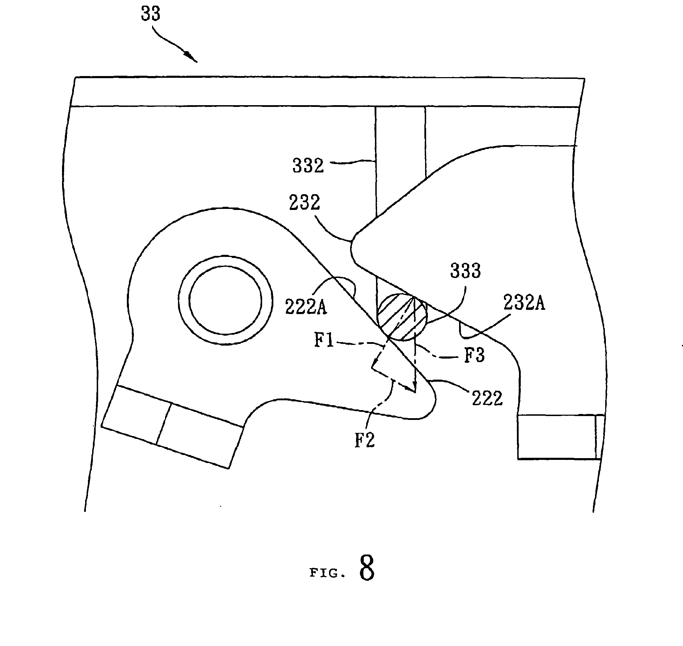

When the horizontal rod portion 333 of the seat hook 332 is moved from the position shown in Fig. 8 to the position shown in Fig. 6, a resistance (F1) applied by the stop portion 232 of the retaining member 23 to the horizontal rod portion 333 of the seat hook 332 has an inclined force component (F2) parallel to the contact surface (232A) of the stop portion 232 of the retaining member 23, and a vertical force component (F3). Due to the occurrence of the inclined force component (F2), the friction produced between the horizontal rod portion 333 of the seat hook 332 and the stop portion 232 of the retaining member 23 is reduced. Hence, the seat hook 332 can be easily ejected by the ejection portion 222 of the swinging member 22.

## Claims

1. A motorcycle (3) with a seat lock (2), the seat lock (2) including a retaining member (23), the motorcycle (3) including a frame unit (31), two wheel units (32) disposed on the frame unit (31), a seat (33) disposed pivotally on the frame unit (31) and locked on the frame (31) by the seat lock (2), a driving member (34) operable to move the retaining member (23) relative to the frame unit (31) to thereby unlock the seat (33) from the frame unit (31), an engine (35) for driving the wheel units (32), and a fuel tank (36) disposed on the frame unit (31), the frame unit (31) including a front frame (311) and a rear frame (312) that are interconnected, the seat (33) including a seat body (331) connected pivotally to the rear frame (312), and a seat hook (332) disposed fixedly on the seat body (331);
**characterized by**:
a fixed member (21) disposed fixedly on the rear frame (312) and including a fixed plate (211) having a retaining groove (213), the seat hook (332) being inserted into the retaining groove (213);
a swinging member (22) including a swinging body (221) disposed pivotally on the fixed plate (211), an anchoring portion (223) extending from the swinging body (221), and an ejecting portion (222) extending from the swinging body (211) and aligned with the retaining groove (213);
the retaining member (23) including a sliding plate portion (231) disposed movably on the fixed plate (211), an anchoring portion (234) extending from the sliding plate portion (231), and a stop portion (232) extending from the sliding plate portion (231) toward the swinging body (221), aligned with the retaining groove (213), and having a guiding surface (236), the stop portion (232) cooperating with the ejecting portion (222) of the swinging member (22) to confine a portion (333) of the seat hook (332) therebetween and therefore within the retaining groove (213); and
a resilient member (24) having two ends connected respectively to the anchoring portions (223, 234) of the swinging member (22) and the retaining member (23) for biasing the retaining member (23) to move toward the swinging member (22) and for biasing the ejecting portion (222) to pivot toward the stop portion (232);
wherein:
the driving member (34) is operable to move the retaining member (23) away from the swinging member (22) in a longitudinal direction (41) so as to misalign the stop portion (232) from the retaining groove (213), thereby allowing for removal of the seat hook (332) from the retaining groove (213); and
after the seat hook (332) is removed from the retaining groove (213), the seat hook (332) can be inserted again into the retaining groove (213) to thereby press against the guiding surface (236) of the stop portion (232) so that the retaining member (23) moves away from the swinging member (22) in the longitudinal direction (41), thereby allowing the portion (333) of the retaining hook (332) to move to a position between the stop portion (232) and the ejecting portion (222).

2. The motorcycle (3) as claimed in Claim 1, further **characterized by** a positioning unit (25), the sliding plate portion (231) being formed with a slide slot (235) extending in the longitudinal direction (41), the positioning unit (25) including:
a position-limiting plate (253) disposed fixedly on the rear frame (312) and spaced apart from the fixed plate (211) of the fixed member (21), the position-limiting plate (253) being formed with an auxiliary groove (254) that is aligned with the retaining groove (213) in the fixed plate (211) and that permits the seat hook 332 to engage therewith;
a rotating shaft (251) extending through the position-limiting plate (253) and the swing body (221) and connected fixedly to the fixed plate (211); and
a positioning shaft (252) extending through the position-limiting plate (253) and the slide slot (235) in the sliding plate portion (231) and connected fixedly to the fixed plate (211).

3. The motorcycle (3) as claimed in Claim 1 or 2, **characterized in that** the fixed member (21) further includes a generally rectangular horizontal bottom plate (212) disposed fixedly on the rear frame (312), the fixed plate (211) extending from a side of the bottom plate (212).

4. The motorcycle (3) as claimed in Claim 3, **characterized in that** the ejection portion (222) of the swinging member (22) and the stop portion (232) of the retaining member 23 have inclined contact surfaces (222A, 322A) that are in contact with each other when the seat (33) is unlocked from the frame unit (31), the extension line (A) of the inclined contact surfaces (222A, 322A) forming an angle (θ) of about 30 degrees with respect to the horizontal bottom plate (212).

5. The motorcycle (3) as claimed in Claim 1 or 2, **characterized in that** the resilient member (24) is configured as a coiled tension spring, and is disposed below the ejecting portion (222).

## Patentansprüche

1. Motorrad (3) mit Sitzverriegelung (2), wobei die Sitzverriegelung (2) ein Rückhaltebauteil (23) einschließt, wobei das Motorrad (3) eine Rahmeneinheit (31), zwei Radeinheiten (32), welche auf der Rahmeneinheit (31) angeordnet sind, einen Sitz (33), welcher schwenkbar auf der Rahmeneinheit (31) angeordnet ist und durch die Sitzverriegelung (2) auf dem Rahmen (31) arretiert ist, ein Antriebsbauteil (34), welches betriebsbereit ist, um das Rückhaltebauteil (23) relativ zu der Rahmeneinheit (31) zu bewegen, um **dadurch** den Sitz (33) von der Rahmeneinheit (31) zu entriegeln, einen Motor (35) zum Antrieb der Radeinheiten (32), und einen Kraftstofftank (36) einschließt, welcher auf der Rahmeneinheit (31) angeordnet ist, wobei die Rahmeneinheit (31) einen Frontrahmen (311) und einer Hinterrahmen (312) aufweist, welche miteinander verbunden sind, wobei der Sitz (22) einen Sitzkörper (331), welcher schwenkbar mit dem Hinterrahmen (312) verbunden ist, sowie einen Sitzhaken (332) einschließt, welcher fest auf dem Sitzkörper (331) angeordnet ist;
**gekennzeichnet durch**:
ein festes Bauteil (21), welches fest auf dem Hinterrahmen (312) angeordnet ist und eine feste Platte (211) mit einer Haltenut (213) einschließt, wobei der Sitzhaken (332) in die Haltenut (213) eingeführt wird;
ein Schwingbauteil (22), welches einen auf der festen Platte (211) schwenkbar angeordneten Schwingkörper (221), einen sich von dem Schwingkörper (221) aus erstreckenden Ankerabschnitt (223), und einen sich von dem Schwingkörper (221) aus erstreckenden und mit der Haltenut (213) fluchtenden Auswurfabschnitt (222) einschießt;
wobei die Haltenut (23) einen Gleitplattenabschnitt (231), welcher beweglich auf der festen Platte (211) angeordnet ist, einen sich von dem Gleitplattenabschnitt (231) aus erstreckenden Ankerabschnitt (231), sowie einen Anschlagabschnitt (232) einschließt, welcher sich von dem Gleitplattenabschnitt (231) in Richtung des Schwingkörpers (221) erstreckt, welcher mit der Haltenut (213) fluchtet, und welcher eine Führungsoberfläche (236) aufweist, wobei der Anschlagabschnitt (232) mit dem Auswurfabschnitt (222) des Schwingbauteils (22) zusammenwirkt, um einen Abschnitt (333) des Sitzhakens (332) dazwischen und daher in der Haltenut (213) abzugrenzen; und
ein elastisches Bauteil (24), welches zwei jeweils mit den Ankerabschnitten (223, 234) des Schwingbauteils (22) und des Rückhaltebauteils (23) verbundene Enden aufweist, um das Rückhaltebauteil (23) zur Bewegung in Richtung des Schwingbauteils (22) vorzuspannen und um den Auswurfabschnitt (222) zur Schwenkung in Richtung des Anschlagabschnitts (232) vorzuspannen;
wobei:
das Antriebsbauteil (34) betriebsbereit ist, um das Rückhaltebauteil (23) von dem Schwingbauteil (22) in Längsrichtung (41) weg zu bewegen, so dass der Anschlagabschnitt (232) von der Haltenut (213) verlagert wird, wodurch eine Entfernung bzw. Entnahme des Sitzhakens (332) aus der Haltenut (213) ermöglicht wird; und
nach Entfernung bzw. Entnahme des Sitzhakens (332) aus der Haltenut (213) der Sitzhaken (332) erneut in die Haltenut (213) eingeführt werden kann, um **dadurch** gegen die Führungsoberfläche (236) des Anschlagabschnitts (232) zu drücken, so dass sich das Rückhaltebauteil (23) von dem Schwingkörper (22) in Längsrichtung (41) weg bewegt, um es **dadurch** dem Abschnitt (333) des Rückhaltehakens (332) zu ermöglichen, sich zu einer Position zwischen dem Anschlagabschnitt (232) und dem Auswurfabschnitt (222) zu bewegen.

2. Motorrad (3) nach Anspruch 1, welches des Weiteren durch eine Positionierungseinheit (25) **gekennzeichnet** ist, wobei der Gleitplattenabschnitt (231) mit einem sich in die Längsrichtung (41) erstreckenden Gleitschlitz (235) ausgebildet ist, wobei die Positionierungseinheit (25) Folgendes einschließt:
eine positionsbegrenzende Platte (253), welche fest auf dem Hinterrahmen (312) angeordnet ist und von der festen Platte (211) des festen Bauteils (21) beabstandet ist, wobei die positionsbegrenzende Platte (253) mit einer zusätzlichen Nut (254) ausgebildet ist, welche mit der Haltenut (213) in der festen Platte (211) fluchtet und welche ein Einrasten bzw. Einklinken des Sitzhakens (232) in diese erlaubt;
eine Drehwelle (251), welche sich durch die positionsbegrenzende Platte (253) und den Schwingkörper (221) erstreckt, und welche mit der festen Platte (211) fest verbunden ist; und
eine Positionierungswelle (252), welche sich durch die positionsbegrenzende Platte (253) und den Gleitschlitz (235) in den Gleitplattenabschnitt (231) erstreckt, undwelche mit der festen Platte (211) fest verbunden ist.

3. Motorrad (3) nach Anspruch 1 oder 2, **dadurch gekennzeichnet, dass** das feste Bauteil (21) des Weiteren eine im Allgemeinen rechtwinklige horizontale Bodenplatte (212) einschließt, welche fest auf dem Hinterrahmen (312) befestigt ist, wobei sich die feste Platte (211) von einer Seite der Bodenplatte (212) aus erstreckt.

4. Motorrad (3) nach Anspruch 3, **dadurch gekennzeichnet, dass** der Auswurfabschnitt (222) des Schwingkörpers (22) und der Anschlagabschnitt (232) des Rückhaltebauteils (23) geneigte bzw. schräge Kontaktoberflächen (222A, 322A) aufweisen, welche miteinander in Kontakt sind, wenn der Sitz (33) von der Rahmeneinheit (31) entriegelt ist, wobei die Ausdehnungslinie (A) der schrägen Kontaktoberflächen (222A, 322A) einen Winkel (θ) von ungefähr 30 Grad bezüglich der horizontalen Bodenplatte (212) bildet.

5. Motorrad (3) nach Anspruch 1 oder 2, **dadurch gekennzeichnet, dass** das elastische Bauteil (24) als gewendelte Zugfeder konfiguriert ist, und unterhalb des Auswurfabschnitts (222) angeordnet ist.

## Revendications

1. Motocyclette (3) avec un verrouillage de siège (2), le verrouillage de siège (2) incluant un élément de retenue (23), la motocyclette (3) incluant une unité de châssis (31), deux unités de roue (32) disposées sur l'unité de châssis (31), un siège (33) disposé d'une manière pivotante sur l'unité de châssis (31) et verrouillé sur le châssis (31) par le verrouillage de siège (2), un élément d'entraînement (34) apte à déplacer l'élément de retenue (23) relativement à l'unité de châssis (31) pour déverrouiller ainsi le siège (33) de l'unité de châssis (31), un moteur (35) pour entraîner les unités de roue (32) et un réservoir de combustible (36) disposé sur l'unité de châssis (31), l'unité de châssis (31) incluant un châssis avant (311) et un châssis arrière (312) qui sont interconnectés, le siège (33) incluant un corps de siège (331) relié d'une manière pivotante au châssis arrière (312) et un crochet de siège (332) disposé fixement sur le corps de siège (331);
**caractérisé par**:
un élément fixe (31) disposé fixement sur le châssis arrière (312) et incluant une plaque fixée (211) ayant une rainure de retenue (213), le crochet de siège (332) étant inséré dans la rainure de retenue (213);
un élément oscillant (22) incluant un corps oscillant (221) disposé d'une manière pivotante sur la plaque fixe (211), une portion d'ancrage (223) s'étendant du corps oscillant (221), et une portion d'éjection (222) s'étendant du corps oscillant (211) et alignée avec la rainure de retenue (213);
l'élément de retenue (23) incluant une portion de plaque de coulissement (231) disposée d'une manière mobile sur la plaque fixe (211), une portion d'ancrage (234) s'étendant de la portion de plaque de coulissement (231) et une portion d'arrêt (232) s'étendant de la portion de plaque de coulissement (231) vers le corps oscillant (221), alignée avec la rainure de retenue (213) et comportant une surface de guidage (236), la portion d'arrêt (232) coopérant avec la portion d'éjection (222) de l'élément oscillant (22) pour confiner une portion (333) du crochet de siège (332) entre elles et de ce fait dans la rainure de retenue (213); et
un élément résiliant (24) ayant deux extrémités reliées respectivement aux portions d'ancrage (223, 234) de l'élément oscillant (22) et de l'élément de retenue (23) pour amener l'élément de retenue (23) à se déplacer vers l'élément oscillant (22) et pour amener la portion d'éjection (222) à pivoter vers la portion d'arrêt (232); où:
l'élément d'entraînement (34) est apte à éloigner l'élément de retenue (23) de l'élément oscillant (22) dans une direction longitudinale (41) de manière à désaligner la portion d'arrêt (232) de la rainure de retenue (213) en permettant ainsi le retrait du crochet de siège (332) de la rainure de retenue (213); et
après que le crochet de siège (332) a été retiré de la rainure de retenue (213), le crochet de siège (332) peut être inséré à nouveau dans la rainure de retenue (213) pour exercer ainsi une pression sur la surface de guidage (236) de la portion d'arrêt (232) de sorte que l'élément de retenue (23) s'éloigne de l'élément oscillant (22) dans la direction longitudinale (41) en permettant ainsi à la portion (333)du crochet de retenue (332) de se déplacer à une position entre la portion d'arrêt (232) et la portion d'éjection (222).

2. Motocyclette (3) selon la revendication 1, **caractérisée en outre par** une unité de positionnement (25), la portion de plaque de coulissement (231) présentant une fente de coulissement (235) s'étendant dans la direction longitudinale (41), l'unité de positionnement (25) incluant:
une plaque de limitation de position (253) disposée fixement sur le châssis arrière (312) et espacée de la plaque fixe (211) de l'élément fixe (21), la plaque de limitation de position (253) présentant une rainure auxiliaire (254) qui est alignée avec la rainure de retenue (213) dans la plaque fixe (211) et qui permet au crochet de siège (332) de venir en prise avec celle-ci;
un arbre de rotation (251) s'étendant à travers la plaque de limitation de position (253) et le corps oscillant (221) et relié fixement à la plaque fixe (211) ; et
un arbre de positionnement (252) s'étendant à travers la plaque de limitation de position (253) et la fente de coulissement (235) dans la portion de plaque de coulissement (231) et relié fixement à la plaque fixe (211).

3. Motocyclette (3) selon la revendication 1 ou 2, **caractérisée en ce que** l'élément fixe (21) comprend en outre une plaque de fond horizontale généralement rectangulaire (212) disposée fixement sur le châssis arrière (312), la plaque fixe (211) s'étendant depuis un côté de la plaque de fond (212).

4. Motocyclette (3) selon la revendication 3, **caractérisée en ce que** la portion d'éjection (222) de l'élément oscillant (22) et la portion d'arrêt (232) de l'élément de retenue (23) ont des surfaces de contact inclinées (222A, 322A) qui sont en contact entre elles lorsque le siège (33) est déverrouillé de l'unité de châssis (31), la ligne d'extension (A) des surfaces de contact inclinées (222A, 322A) formant un angle (θ) d'environ 30 degrés par rapport à la plaque de fond horizontale (212).

5. Motocyclette (3) selon la revendication 1 ou 2, **caractérisée en ce que** l'élément résiliant (24) est configuré comme un ressort de tension hélicoïdal et est disposé en dessous de la portion d'éjection (222).
